Europäisches Patentamt

European Patent Office

Office européen des brevets

(19)

(11) Veröffentlichungsnummer: **0 007 620**
**B1**

(12) **EUROPÄISCHE PATENTSCHRIFT**

(45) Veröffentlichungstag der Patentschrift: 07.04.82

(51) Int. Cl.³: **C 10 B  53/00**

(21) Anmeldenummer: **79102625.5**

(22) Anmeldetag: **24.07.79**

(54) Verfahren zur thermischen Behandlung von in einem beheizbaren Beschickungsraum eines Autoklaven eingebrachten Rückständen, Bauteilen oder dergleichen, und Vorrichtung zur Durchführung dieses Verfahrens.

(30) Priorität: **24.07.78 DE 2832414**

(43) Veröffentlichungstag der Anmeldung:
**06.02.80 Patentblatt 80/3**

(45) Bekanntmachung des Hinweises auf die Patenterteilung:
**07.04.82 Patentblatt 82/14**

(84) Benannte Vertragsstaaten:
**AT BE CH FR GB IT NL SE**

(56) Entgegenhaltungen:
**DE - A - 2 639 974**
**US - A - 3 807 564**

(73) Patentinhaber: **PPT Pyrolyse- und Prozessanlagentechnik GmbH & Co.**
**Oeltzenstrasse 7 Postfach 809**
**D-3000 Hannover 1 (DE)**

(72) Erfinder: **Böder, Wilfried**
**Sulenstrasse 23**
**D-3013 Barsinghausen (DE)**

(74) Vertreter: **Geyer, Werner, Dr.-Ing. et al,**
**Patentanwälte GEYER, HAGEMANN & PARTNER**
**Postfach 860329**
**D-8000 München 86 (DE)**

Courier Press, Leamington Spa, England.

## Verfahren zur thermischen Behandlung von in einem beheizbaren Beschickungsraum eines Autoklaven eingebrachten Rückständen, Bauteilen oder dergleichen, und Vorrichtung zur Durchführung dieses Verfahrens

Die Erfindung bezieht sich auf ein Verfahren zur thermischen Behandlung von in einen beheizbaren Beschickungsraum eines Autoklaven eingebrachten Rückständen, Bauteilen oder dergleichen, die dort unter Wärmezufuhr und unter Druckaufbau einer erhöhten Temperatur ausgesetzt werden, wobei die entstehenden Pyrolysegase unter Druck aus dem Autoklaven zu einer nachgeschalteten Weiterbehandlung abgeführt werden.

Die Erfindung bezieht sich weiterhin auf eine Vorrichtung zur Durchführung eines solchen Verfahrens, mit einem als beheizbarer Beschickungsraum ausgebildeten Autoklaven als Reaktionsraum, der eine Leitung mit einem Druckventil zum Abführen von in seinem Inneren erzeugten Pyrolysegasen zur Weiterverarbeitung aufweist.

Herkömmliche Pyrolyseanlagen sind, soweit sie nicht etwa im Hochschulbereich zu Experimentierz-wecken als Demonstration mit herkömmlichen Laboröfen ausgeführt werden, derzeit vorwiegend als Müllpyrolyseanlagen in Entwicklung. Auch viele Arten von Destillationsprozessen im Crackverfahren, insbesondere auf dem Gebiet der Petrochemie, stellen Teile pyrolytischer Prozesse dar.

In den letzten Jahren wurde die Anwendung des Verfahrens der Pyrolyse insbesondere in Verbindung mit der Entsorgung von Müll weltweit diskutiert. Dabei ist eine Vielzahl von Verfahrensschritten und -stufen bekannt, wie sich aus der einschlägigen Fachliteratur ergibt (zum Beispiel Zeitschrift "Müll und Abfall" No. 3/76, Seiten 87 bis 92; Zeitschrift "Brennstoffwärme-kraft" 28 (176) Nr. 4. Seiten 153—158). Diesen Müllpyrolyseverfahren ist im wesentlichen gemeinsam, daß das der pyrolytischen Behandlung zu unterziehende Gut kontinuierlich aufgegeben werden soll; überdies werden auch im Hinblick auf den Pyrolysevorgang als solchen vielfach gewisse Abstriche gemacht, was zu Verfahren führt, die dem strengen Begriff der reinen Pyrolyse (thermischer Zerlegung unter Sauerstoffabschluß) nicht mehr voll unterzuordnen sind. Hierbei werden teilweise unmittelbar Brenneranlagen eingesetzt, um eine direkte Beheizung des Produktes oder Vorheizungen durchzuführen (vgl. etwa: Trommelreaktoren, Wirbelschichtbett-Verfahren usw.).

Bei anderen teilpyrolytischen Prozessen zur Bearbeitung von Produkten (sogenannte "Schwergasverfahren") werden schon lange bekannte Verfahrensschritte benutzt. Dabei wird vielfach ein Ofenraum direkt mit einem Brenner, der unterstöchiometrisch beheizt wird, beaufschlagt und die bei der Verbrennung entstehende Strahlungs- und Konvektionswärme unmittelbar dafür benutzt, um das Beschickungsprodukt (soweit es organischer Natur ist) zu verschwelen. Die entstehenden Pyrolysegase werden mit den eingetragenen Rauchgasen in eine zweite Kammer geleitet und dort unter hohem Sauerstoffüberschuß verbrannt. Da je nach Beschickung die Erzeugung der Pyrolysegase durch gleichartig vorhandene Molekülketten, die gecrackt werden, schlagartig oder schwallartig erfolgen kann, kommt es im Hinblick auf die Auslegung der Nachverbrennung und die Heranschaffung von genügend Sauerstoff in den kritischen Phasen immer wieder zu Schwierigkeiten. Das schwallartige Entstehen von Prozess- bzw. Pyrolysegasen führte dazu, daß bestimmte (eigentlich unerwünschte) Verfahrensmaßnahmen jeweils ergriffen werden mußten: So wurde es erforderlich, eine große Auslegung von Reaktionsräumen für eine relativ kleine Menge von Beschickungsprodukten vorzunehmen, soferne letztere hochenergetischer Natur war. Weiterhin mußten relativ große Nachbrenneranlagen mit einem hohen Grundlastbedarf im Hinblock auf den zu erwartenden Schwall entstehender Gase vorgesehen werden, was hinsichtlich der Auslegungsparameter für die Primärenergiezufuhr wie auch für die Sicherheit ungünstig ist. Bei den bekannten Prozessen müssen die entstehenden Pyrolysegase jeweils so abgenommen werden, wie sie entstehen, wodurch sich bei nachgeschalteter Weiterverarbeitung stets prinzipiell instabile Verhältnisse einstellen.

Hierdurch ergeben sich nicht unerhebliche Nachteile im Hinblick auf die Verwertung von z.B. Abwärme etc. Um hier eine Besserung zu schaffen, wurde dann eine Temperaturschaltung dieser Prozesse so eingeführt, daß durch das Nachschalten bzw. Aufschalten unterschiedlicher Temperaturen eine Zerlegung der vorhandenen Kohlenwasserstoffmoleküle nacheinander erfolgt. Eine derartige Temperaturschaltung kann etwa so aufgebaut sein, daß zunächst der Reaktionsraum nur mit einer Temperatur von ca. 200°C solange beaufschlagt wird, bis alle Gase bei 200°C entstanden sind. Danach wird die Temperatur stufenweise immer mehr erhöht und jeweils die bei der betreffenden Temperatur möglichen Zerlegungen ausgeführt. Hierzu werden bis zu sechs Temperaturstufen benötigt, wobei stets Voraussetzung ist, daß in einem großen Reaktionsraum vergleichsweise nur wenig Produkt ein und derselben Beladeart vorliegt, so daß such tatsächlich bei den gewählten niedrigen Temperaturstufen das gesamte Produkt behandelt werden kann.

Bei der Verwendung fast ausschließlich homogenen Materiales für die gewünschte pyrolytische Behandlung lassen sich natürlich die Zerlegungspunkte der Kohlenwasserstoffmolekülketten relative gut vorherbestimmen, wodurch eine einwandfreie Auslegung der Anlage möglich ist. Im Hinblick auf stark unhomogenes Inputmaterial, wie dies bei der Abfallpyrolyse und dem Recycling von Verbundwerkstoffen gegeben ist, kann eine solche Betriebsweise nicht durchgeführt werden.

Aus der DE—A—2 639 974 ist ein Verfahren zur thermischen Behandlung von Produkten bekannt, die in einen beheizbaren Beschickungsraum eines Autoklaven eingebracht und dort unter Wärmezufuhr und Druckaufbau einer erhöhten Temperatur innerhalb eines Bereiches zwischen etwa 600°C und etwa 1000°C ausgesetzt werden. Die dabei entstehenden Pyrolysegase werden unter Druck aus dem Autoklaven zu einer nachgeschalteten Weiterbehandlung abgeführt. Dabei wird durch unterstöchiometrische Verbrennung, somit nicht unter Abwesenheit von Sauerstoff, der Abfall vergast. In dem Absugsrohr für die entstehenden Gase ist ein Ventil angebracht, um innerhalb des Beschickungsraumes einen möglichst gleichmäßigen Druck zum Erhalt eines kontinuierlichen Betribes zu gewährleisten. Hierdurch soll ein bestimmtes Druckniveau im Beschickungsraum zwar nicht unter-, aber auch nicht überschritten werden. Insbesondere soll diese Konstanthaltung des Druckes ersichtlich auch einen unerwünschten Druckanstieg im Inneren des Beschickungsraumes über den voreingestellten Wert hinaus sicher vermeiden. Bei diesem vorbekannten Verfahren, das auf ein Behandeln von Abfällen aller Art abstellt, zeigt sich aber wiederum die bereits weiter oben geschilderte Problematik, die bei der thermischen Behandlung von Produkten möglicherweise starker Inhomogenität auftritt: Sollen hier Produkte behandelt werden, bei denen es zu einem im voraus durchaus nicht abschätzbaren plötzlichen und schnellen, schwallartigen Entstehen von Prozessgasen kommen kann, wie dies etwa bei Metallteilen hochenergetischer Beschichtungen (etwa Kautschuk/Metall) der Fall ist, dann würde es bei dem vorbekannten Verfahren Zu einem plötzlichen und außerordentlich großen Druckanstieg im Autoklaven und damit zu einem dann möglicherweise unkontrollierbaren Verfahrensablauf kommen, der zu einer Gefährdung der Gesamtanlage führen könnte. Dies umso mehr, als die dort vorgesehenen Aufheiztemperaturen in einem sehr hohen Bereich liegen, wodurch sich noch zusätzlich in erheblichem Maße die Gefahr eines Auftretens absolut unerwünschter exothermer oder exothermähnlicher Reaktionen ergeben kann. Probleme könnten hier auch im Hinblick auf die Weiterverarbeitung der freigesetzten Prozessgase bestehen: Denn da innerhalb des Beschickungsraumes ein konstanter Druck gehalten werden soll, würde dies bedeuten, daß bei schwallartigem, plötzlichem Auftreten von Prozessgasen eine sofortige Abführung des größten Teiles dieser Gase erfolgen müßte, um den Druck nicht über den erwünschten Wert ansteigen zu lassen. Die aus dem Autoklaven dann abgeleiteten Gase müßten somit anfangs unter sehr hohem Druck, dann aber unter ständig nachlassendem Druck der nachgeschalteten Feuerstelle zugeführt werden, was leichtzu entweder instabilen Verhältnissen im Brenner oder, bei einer Rückleitung der Gase zur Aufheizung, im Beschickungsraum des Autoklaven führen müßte und letzlich gar zur Notwendigkeit eines teilweisen Ablassens solcher Gase ohne Ausnutzung deren Wärmeenergie führen könnte.

Ausgehend hirvon liegt der Erfindung die Aufgabe zugrunde, ein Verfahren der eingangs genannten Art derart zu verbessern, daß auch die thermische Behandlung stark inhomogener Produkte unterschiedlichster Qualität und Menge unschwer möglich und eine Weiterverarbeitung der entstehenden Prozessgase besonders wirtschaftlich und auch im Hinblick auf deren unterschiedlich anfallende Menge problemfrei möglich ist. Weiterhin soll eine Vorrichtung zur Durchführung eines solchen Verfahrens gefunden werden.

Erfindungsgemäß wird diese Aufgabe bei einem Verfahren der eingangs genannten Art dadurch gelöst, daß die Rückstände, Bauteile oder dergleichen im Autoklav in Abwesenheit von Sauerstoff auf eine Temperatur bis etwa 450°C aufgeheizt und die dabei erzeugten Pyrolysegase nach Erreichen eines Vorgewählten Druckniveaus bis zu 5 bar abgezogen werden. Mit dem erfindungsgemäßen Verfahren ist die thermische (pyrolytische) Behandlung der kompletten Bandbreite industrieller Rückstände und Bauteile möglich, sowohl wenn dieselben rein organischer Natur sind, als auch im Falle organisch-anorganischer Verbundwerkstoffe (Kautschuk/Metall, Lack/Metall etc.). Beim erfindungsgemäßen Verfahren lassen sich die entstehenden Prozessgase an Ort und Stelle verarbeiten. Die Anwendung eines Druckautoklaven zur Aufnahme relativ hoher Drücke für die Pyrolyse im Rahmen des erfindungsgemäßen Verfahrens stellt sicher, daß ein Reaktorraum entsprechender Größe verfügbar ist, um auch nicht bekannte, stark inhomogene Produktmischungen pyrolytisch bearbeiten zu können. Gleichzeitig wird bei dem erfindungsgemäßen Verfahren der Aufbau einer Drucksteuerung für die externe Weiterverarbeitung, z.B. die Verbrennung der Pyrolysegase in einem nachgeschalteten Oxidations-Verbrennungsverfahren (Feuerstelle), möglich.

Über den beim erfindungsgemäßen Verfahren aufgebauten Vordruck wird das Gas z.B. an eine Feuerstelle transportiert und kann den dort vorhandenen feuerungstechnischen und den nachgeschalteten rauchgasseitigen Widerstand der Heizflächen gut überwinden, wobei die Einspeisbedingungen des Gases in den Brenner—im Gegensatz etwa zu herkömmlichen Verfahren—im wesentlichen konstant sind und dadurch eine stabile Verbrennung gut möglich ist. Bei Einsatz des erfindungsgemäßen Verfahrens lassen sich ohne Schwierigkeit unterschiedliche Mengen des erzeugten Pyrolysegases je nach Größe der externen, vorhandenen Feuerstelle und der dort installierten Brennerleistung entnehmen. Sollte mehr Pyrolysegas produziert als entnommen werden, so stellt es beim erfindungsgemäßen Verfahren keine Schwierigkeit dar, die augenblicklich nicht benötigten Gase innerhalb der Druckfüllung im Autoklaven zu speichern. Durch geeignete Steuerung der Heizung kann danach der Entstehungsprozess dieser Prozessgase, falls erforderlich, leicht verlangsamt werden. Sollte aus produktspezifischen Gründen eine bis zum Erreichen des vorgewählten Druckniveaus entsprechende Erzeugung der Prozessgasmenge nicht möglich sein, so kann auch kein Prozessgas mehr an den Brenner abgegeben werden und die bei geringem Anfall von Pyrolysegas bei herkömmlichen Verfahren auftretende Schwierigkeit einer instabilen Verbrennung ist leicht vermieden. Ein zu schnelles Entstehen von Prozessgasen (schwallartiges Entstehen) oder entsprechender exothermer oder exothermähnlicher Reaktionen beim Beladen etwa großer Metallteile mit hochenergetischen Beschichtungen (etwa Kautschuk/Metall) kann wiederum ohne Schwierigkeit durch die Wegnahme der Beheizung und die Dämpfung des Prozesses durch ein geeignetes Kühlmittel (etwa Kühlluft) jederzeit gesteuert bzw. verhindert werden. Durch die indirekte Aufheizung des zu behandelnden Gutes und durch die Möglichkeit einer Regelbarkeit des Gesamtprozesses über entsprechende Druckaufnahmeorgane (Ventile) und Prozeßabsperrorgane ist es möglich, auch unterschiedlichen Sicherheitsanforderungen stets Rechnung zu tragen. Der Prozeß kann ohne Hilfe einer externen Feuerstelle jederzeit unterbrochen werden, was insbesondere für den Aufbau einer Sicherheitskette in jeder Feuerstelle notwendig ist. Durch geeignete Wahl des Druckniveaus kann das Austragen von Feststoffen aus dem Produktraum praktisch über die vorhandene Dämpfung des Druckpolsters absolut verhindert werden, was für eine nachgeschaltete externe Feuerstelle mit der Oxydationsverbrennung und auch im Hinblock auf die Emissionen wichtig ist.

In vorteilhafter Ausgestaltung des erfindungsgemäßen Verfahrens wird die Beheizung des Beschickungsraumes in Abhängigkeit vom Druckniveau im Autoklaven gesteuert. Hierdurch kann, je nach Bedarf der externen Feuerstelle, das Verfahren bzw. die Erzeugung der Pyrolysegase jederzeit beschleunigt oder verlangsamt werden. Da sowohl Heizprozeß, wie auch Erzeugungsprozeß (Produktgasprozeß) voneinander unabhängig sind, ist leicht eine Anpassung an unterschiedliche Betriebsverhältnisse der Feuerstelle und unterschiedliche Sicherheitsketten möglich. Vorteilhafterweise wird nach Einbringen des zu behandelnden Materiales in den Beschickungsraum und vor Aufheizen desselben eine Spülung des Beschickungsraumes mittels Inertgas durchgeführt: hierdurch wird sichergestellt, daß zu Beginn der pyrolytischen Behandlung keinerlei Restsauerstoffgehalt mehr in dem Beschickungsraum vorhanden ist und damit unerwünschte Oxydationsprozesse zuverlässig vermieden werden. Eine solche Spülung mit Inertgas kann vorteilhafterweise auch nach Ende des pyrolytischen Behandlungsprozesses durchgeführt werden, wodurch sich auch die letzten erzeugten Prozeßgase aus dem Autoklaven ausblasen und einer z.B. nachgeschalteten Weiterverarbeitung zuführen lassen.

Mit Vorteil können die aus dem Druckautoklaven abgeleiteten Pyrolysegase unmittelbar einer Weiterverarbeitung derart zugeführt werden, daß man sie dem Brennraum eines Wärmeerzeugers zuleitet. Vorteilhafterweise wird dabei für eine konstante Verbrennungsleistung im Brennraum des Wärmeerzeugers die neben der Pyrolysegaszufuhr erforderliche Zufuhr eines Primärbrennstoffes bei konstantem Luftdurchsatz in Abhängigkeit von der Einregelung eines vorgegebenen Sauerstoffgehaltes im Rauchgas gesteuert, wofür insbesondere die Anwendung eines Verfahrens und einer Vorrichtung zum kontinuierlichen Verbrennen eines Brennstoffes gemäß der DE—A—28 21 367 geeignet sind. Bei der Anwendung eines solchen Verfahrens bietet sich die vorteilhafte Möglichkeit, Sekundärenergie (aus den Pyrolysegasen) mit einem night festzulegenden, selbst stark schwankenden Heizwert aufzunehmen und optimal unter Ausnutzung der vollen Kesselwärmeleistung auszubrennen. Dabei wird dann die Zufuhr an Primärenergie zu dem Brennraum des Wärmeerzeugers entsprechend der Verwendung bzw. dem Anfall an zu verbrennenden Pyrolysegasen zurückgenommen, wodurch sich eine optimal wirtschaftliche Ausnutzung des verfügbaren Pyrolysegas-Brennstoffes erzielen läßt.

In weiterer vorteilhafter Ausgestaltung des erfindungsgemäßen Verfahrens werden zur Aufheizung des Druckautoklaven aus der Rachgasführung des nachgeschalteten Wärmeerzeugers abgeleitete Rauchgase bis zu einer Temperatur von ca. 850°C verwendet. Dabei läßt sich vorteilhafterweise in dem nachgeschalteten Wärmeerzeuger eine Vorrichtung zur Rauchgasführung einsetzen, wie sie in der DE—A—28 26 048 Beschrieben ist, und bei der sich in besonders wirtschaftlicher und vorteilhafter Weise Rauchgas beliebiger Zwischentemperatur innerhalb eines weiten Temperaturbereiches zur Abgabe an nachgeschaltete Verbraucher erzeugen bzw. ableiten läßt, wobei auf die Beschriebund dieser Druckschrift ausdrücklich verwiesen sei. Durch entsprechende Geschwindigkeit der Heizgasführung kann eine bereits bei der Auslegung solcher Anlagen Vorherbestimmbare Zerlegung unterschiedlicher Produkte erzielt werden. Die Behiezung kann dabei mit unterschiedlichen Temperaturstufen des Heizgases bei unterschiedlichen Geschwindigkeiten, je nach Beschickungsprodukt, erfolgen.

In vorteilhafter Ausgestaltung des erfindungsgemäßen Verfahrens wird weiterhin die Aufheizung des Druckautoklaven über eine Durchleitung der heißen Rauchgase aus dem Wärmeerzeuger durch einen um die Außenfläche der Wände des Autoklaven-Beschickungsraumes ausgebildeten Spalt vorgenommen. Eine andere, vorzugsweise Ausgestaltung des erfindungsgemäßen Verfahrens besteht noch darin, daß die Aufheizung des Autoklaven mittels Durchleiten heißer Rauchgase aus dem Wärmeerzeuger durch innerhalb des Beschickungsraumes angeordnete Heizkanäle vorgenommen wird.

Da die Entstehung der Kohlenwasserstoffgase im Rahmen einer Pyrolyse nur bei einer entsprechenden Verweilzeit (Aufheiz- und Erhitzungszeit) möglich ist, handelt es sich bei einem pyrolytischen Vorgang verfahrenstechnisch grundsätzlich stets um einen intermittierenden Prozeß, der allerdings durch geeignete Beschickungsmethoden optimiert werden kann. Vorteilhafterweise wird bei dem erfindungsgemäßen Verfahren deim Beschickungsraum des Druckautoklaven das zu behaldelnde Material chargenweise zugeführt, wobei—wiederum vorzugsweise—die Zuführung des zu behandelnden Materiales in den Beschickungsraum kontinuierlich erfolgt. Andererseits besteht aber auch die Möglichkeit, durch Schleusenbeschicdung o.ä. eine zusätzliche Optimierung im Hinblick auf eine kontinuierliche Beschickung zu erzielen.

Die erfindungsgemäße Vorrichtung geht aus von einer Vorrichtung der eingangs genannten Art, die dadurch gekennzeichnet ist, daß der Beschickungsraum als gegen Sauerstoffzutritt verschließbarer, druckfester Autoklav ausgelegt und das Druckventil so ausgebildet ist, daß es nach Erreichen eines voreinstellbaren Öffnungsdruckes, der im Bereich bis 5 bar liegt, die Leitung freigibt und bei Unterschreiten dieses Öffnungsdruckes die Leitung absperrt. Vorzugsweise wird dabei der Druckautoklav als im Querschnitt rund ausgebildeter Druckbehälter ausgeführt, wodurch die Möglichkeit geschaffen wird, auch sehr sperrige Produkte aufnehmen zu können und, etwa in Verbindung mit einem geeigneten Bajonettverschluß, den ganzen Radius als Beschickungsöffnung zu nutzen. Dabei kann die Lage eines solchen Druckbehälters sowohl z.B. senkrecht, wie auch liegend angeordnet werden. Durch entsprechende Beschickungsgarnituren, wie Gleisbeschickung mittels Wagen etc., läßt sich dabei der Beladungsprozeß rationalisieren und vollautomatisch betreiben.

Eine einfache und wirkungsvolle Art der Aufheizung der erfindungsgemäßen Vorrichtung besteht darin, daß der Autoklav doppelwandig ausgeführt und der Spalt zwischen der Wand des Beschickungsraumes und der Außenwand als Durchströmkanal für das Heizmedium ausgebildet ist. Hierbei werden vorzugsweise innerhalb der Doppelwandung des Druckautoklaven spiralförmig angeordnete Leitbleche zur Leitung des Heizmediums spiralförmig in Autoklaven-Längsrichtung vorgesehen.

Eine andere vorteilhafte Ausgestaltung der erfindungsgemäßen Vorrichtung besteht darin, daß zur Pyrolyse-gasführung des Heizkrieslaufes innerhalb des Beschickungsraumes angeordnete Heizrohre vorgesehen sind, die, wiederum vorzugsweise, in der Nähe der Wände des Beschickungsraumes, jedoch außerhalb des Bereiches zur Aufnahme des Beschickungsmateriales angeordnet sind. Mit Vorteil können dabei Heizrohre unterschiedlicher Durchmesser vorgesehen sein, wobei Heizrohre gleichen Durchmessers jeweils unabhängig von denen anderer Durchmesser an den Heizkreislauf an- bzw. von ihm abschaltbar sind. Durch unterschiedliche Auslegung der Heizrohre lassen sich hierdurch beliebige Heizflächenvariationen erzielen, so daß ähnliche Steuerungsmöglochkeiten für die Beheizung wie im Falle der Anwendung eines Heizmäntels innerhalb einer Doppelwandung gegeben sind.

Vorteilhafterweise ist bei einer erfindungsgemäßen Vorrichtung weiterhin der Heizkreislauf des Druckautoklaven wahlweise an den Kreislauf eines Kühlmediums anschließbar, wodurch der Heizmantel bei Übertemperatur oder bei zu hohem Druckansteig als Kühlmantel genutzt werden kann. In diesem Fall kann eine Beaufschlagung des Heizmantels mit einem geeigneten Kühlmedium, etwa Frischluft als Kühlluft, leicht erfolgen. Hierdurch ergibt sich insgesamt eine weitere Steuerbarkeit des erfindungsgemassen Prozesses.

Vorteilhafterweise wird bei einer erfindungsgemäßen Vorrichtung die vom Druckventil gesteuerte Pyrolysegasleitung mit einem Brenner eines Wärmeerzeugers verbunden, wie ein solcher etwa in der DE—A—28 21 367 beschrieben ist. In jedem Fall empfiehlt es sich, bei einer erfindungsgemäßen Vorrichtung durch spezielle Steuerungseinrichtungen für die Zuleitung des Heiz- bzw. Kühlmediums an den Druckautoklaven ein besonderes sicheres Beherrschen des Prozesses zu gewährleisten.

Durch die Erfindung wird die Möglichkeit geschaffen, industrielle Rückstände, Bauteile oder dergleichen großer Inhomogenität, gegebenenfalls mit Feuchtigkeit etc., ohne Schwierigkeiten der gewünschten pyrolytischen Behandlung unterwerfen zu können und dabei die erzeugten Pyrolysegase unter Wärmegewinnung z.B. besonders wirtschaftlich zu verbrennen, ohne daß eine Verbrennung dieser Rückstände etc. in bereits vorhandenen Feuerstellen im Rahmen des Kesselhauses oder der gewählten Wärmeerzeugung erforderlich wäre. Anorganische Materialien von Verbundwerkstoffen lassen sich dabei sogar wiedergewinnen, wodurch ein echtes Recycling solcher wertvoller Grundmaterialien nicht nur von der blanken Materialseite her, sondern sogar unter Erhaltung der bei vorausgegangenen Verarbeitungsoperationen erzielten Ergebnisse möglich ist, d.h. etwa metallische Bauteile können somit nach der pyrolytischen Entschichtung, z.B. von Kunststoffauflagen, wieder erneut einer geeigneten Beschichtung unterzogen und dann als fertige Bauteile genutzt werden. Die erfindungsgemäße Vorrichtung ist einfach betreibbar, da man alles, was anfällt und pyrolytisch behandelt werden soll, ohne schwierige Vorabberechnung der Aufnahmekapazität o.ä. einbringen kann. Dabei läuft der Zerlegungsprozeß vollautomatisch über die gewählte Druckabpufferung im Autoklaven ab, wobei selbst bei Fehlbeschickungen keinerlei Gefahren für die Bedienungspersonen oder die Vorrichtung auftreten.

Die Erfindung wird nachfolgend anhand der Zeichnungen näher erläutert. Es zeigen:

Fig. 1 eine erfindungsgemäße Vorrichtung zur Durchführung des erfindungsgemäßen Verfahren mit einem nachgeschalteten Wärmeerzeuger;

Fig. 2 und 3 verschiedene Ausführungsmöglichkeiten für die Beheizung der erfindungsgemäßen Vorrichtung.

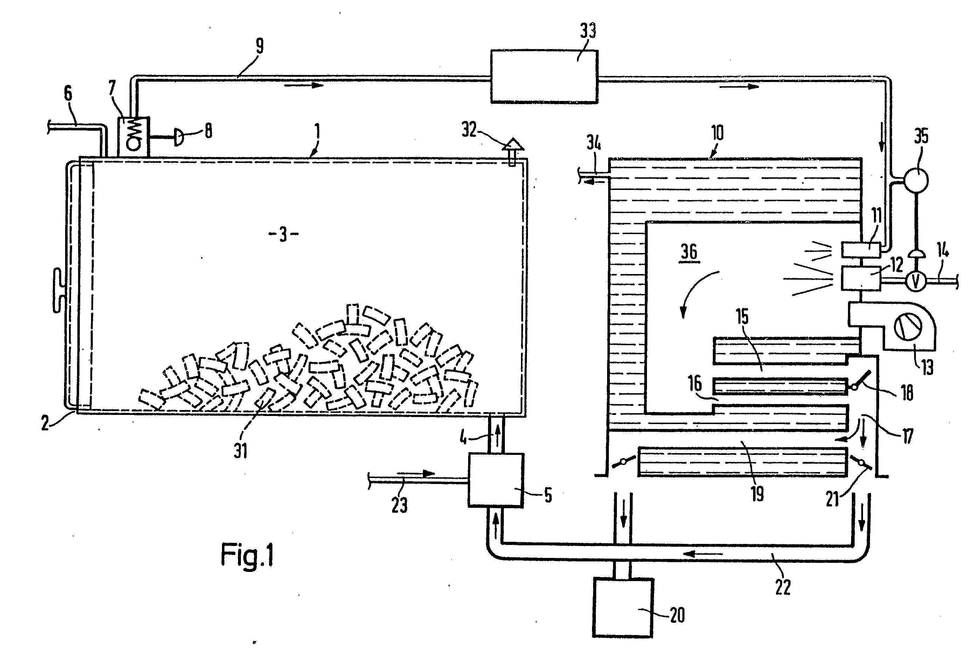

Die Darstellung aus Fig. 1 zeigte eine als Druckautoklav 1 ausgeführte Vorrichtung, die in ihrem Inneren einen Reaktionsraum 3 aufweist, der über einen Bajonettverschluß 2 geöffnet und verschlossen und auf diesem Wege mit zu behandelndem Gut 31 gefüllt werden kann. Über eine Zuleitung 4 kann ein geeignetes Heizmedium dem Druckautoklaven 1 zugeführt und dessen Wände damit aufgeheizt werden. Nach der Wärmeabgabe an den Druckautoklaven 1 kann das abgekühlte Heizmedium über die Ableitung 6 wieder fortgeleitet und ggf. etwa einen Kamin zugeführt werden. Der Bajonettverschluß ist so ausgeführt, daß durch ihn ein absolut dichtes Verschließen des Druckautoklaven 1 vorgenommen werden kann.

Am Druckautoklaven 1 ist weiterhin ein Druckventil 7 angebracht, das den Durchlaß zu einer Pyrolysegasleitung 9 verschließt bzw. freigibt, wobei über eine Einstellung 8 der Öffnungsdruck, bei dessen Erreichen im Inneren des Druckautoklaven 1 das Druckventil 7 die Pyrolysegasleitung 9 öffnet, einstellbar ist. In der Gasleitung 9 kann ein Kondensator (33) oder ein Gaswäscher angeordnet sein, der zum Auswaschen solcher Bestandteile der Pyrolysegase dient, deren Einleiten in den nachgeschalteten Brenner eines Wärmeerzeugers 10 oder einer anderen nachgeschalteten Einrichtung unerwünscht wäre. Die Pyrolysegasleitung 9 verbindet den Druckautoklaven 1 mit einem Brenner 11 eines nachgeschalteten Wärmeerzeugers 10, der noch einen zweiten Brenner 12 zum Verbrennen von über die Leitung 14 herangeführten Primärbrennstoff aufweist. Mittels eines Gebläses 13 wird zur Erzeugung einer konstanten Verbrennungsleistung der Brennraum 36 mit einem gleichmäßigen (aber in der Intensität einstellbaren) Luftdurchsatz beaufschlagt. Entsprechend diesem Luftdurchsatz wird über den Brenner 12 die für eine kontinuierliche Verbrennung erforderliche Brennstoffzugabe (Primärbrennstoff) in Abhängigkeit von der Einregelung eines bestimmten Sauerstoffgehaltes im Abgas eingespeist (die entsprechenden Regeleinrichtungen sind in Fig. 1 nicht gezeigt, da hierfür herkömmliche Anlagen Einsatz finden können). Wird über die Pyrolysegasleitung 9 zu verbrennendes Gas dem Brenner 11 zugeführt, dann wird über die Regeleinrichtung 35 bei weiterhin konstantem Luftdurchsatz im Brennraum 36 eine der Menge und dem Heizwert des Prozessgases entsprechende Rücknahme an Primärbrennstoff-Eindüsung vorgenommen, wobei auch hierbei wiederum die entsprechenden Steuerungen über die Einregelung des gewünschten Restsauerstoffgehaltes im Rauchgas erfolgen. Die im Brennraum 36 erzeugten Heizgase werden sodann über Heizflächen 15 bzw. 16 unterschiedlichen Durchlaßguerschnittes (damit auch unterschiedlicher Heizleistung an das sie umgebende Wärmetransportmedium, z.B. Wasser oder Heißdampf) in eine Sammelkammer 17 eingeleitet. Durch Verstellen eines Klappe 18 innerhalb der Sammelkammer 17 ist es möglich, die Querschnitte der einzelnen Kanäle 15 und 16 kontinuierlich und beliebig einander zu- bzw. abzuschalten, so daß eine kontinuierliche Mischung der unterschiedlich heißen, aus den Kanälen 15 und 16 austretenden Rauchgasströme erfolgen und damit eine gewünschte Temperatureinstellung der die Sammelkammer 17 verlassenden Rauchgase möglich ist. Die Sammelkammer 17 weist zwei Ausgänge auf. deren einer über eine Leitung 22 der Abgabe von Rauchgasen an den nachgeschalteten Druckautoklaven 1 dient und deren anderer über eine erneute Heizstrecke 19, längs derer eine weitere Wärmeabgabe an dam im Wärmeerzeuger 10 vorhandene Wärmetransportmedium stattfinden kann, zu einem Kamin 20 führt. Am Ausgang zur Leitung 22 ist eine Drosselklappe 21 und am Ausgang des Kanals 19 eine Drosselklappe 37 angeordnet, mittels derer eine Steuerung der in die beiden Austrittsquerschnitte eintretenden Rauchgase aus der Sammelkammer 17 möglich ist. Dabei sind die Stellungen der Drosselklappen 21 und 37 jeweils so aufeinander abgestimmt, daß hinter der Brennkammer 36 stets der erforderliche rauchgasseitige Widerstand, der für eine stabile Verbrennung in der Brennkammer 36 wichtig ist, aufrechterhalten bleibt. Die Art der heir angewendeten Rauchgasführung bzw. Rauchgasmischung entspricht im Prinzip der in DE—A— 28 26 048 beschriebenen Rauchgasführung, auf die hier ausdrücklich werwiesen sei.

Zwischen die Rauchgasleitung 22 und die Zuleitung 4 für das Heizmedium an den Druckautoklaven 1 ist eine Steuereinrichtung 5 zwischengeschaltet, die auch mit einer Zuleitung 23 zur Einspeisung eines Kühlmediums verbunden ist. Sollte es erforderlich sein, dann wird über die Steuereinrichtung 5 ausschließlich das Kühlmedium aus der Leitung 23 über die Zuleitung 4 den Wänden des Druckautoklaven 1 zugeführt, um hier durch eine Kühlung eine Steuerung der im Druckautoklaven 1 stattfindenden Prozesspyrolyse durchführen zu können. Auch die Ableitung des Kühlmediums aus den Heiz- bzw. Kühlkanälen des Druckautoklaven 1 findet dann über die Ableitung 6 statt.

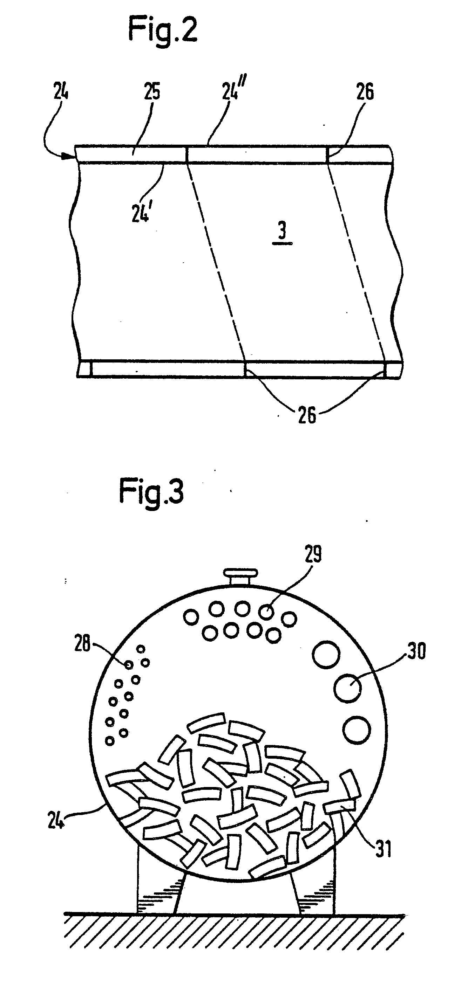

Die Aufheizung der Wände des Druckautoklaven 1 (bzw. deren Abkühlung) kann über verschiedene Möglichkeiten erfolgen, von denen zwei in den Fig. 2 und 3 dargestellt sind:

Eine Möglichkeit (Fig. 2) besteht darin, daß die Wand 24 des Druckautoklaven doppelwandig mit einer den Reaktionsraum 3 abschließenden Innenwand 24' und einer im radialen Abstand von dieser angeordneten Außenwand 24'' ausgebildet ist. Dies ist der Fall, wenn—wie bei den in den Figuren gezeigten Darstellungen vorausgesetzt—der Druckautoklav 1 in Form eines liegenden Druckbehälters runden Querschnitts ausgeformt ist. Völlig analog können jedoch auch die gezeigten Maßnahmen auf andere Formen von Druckautoklaven angewendet werden.

Zwischen der Innenwand 24' und der Außenwand 24'' der in Fig. 2 dargestellten Ausführungsform wird ein Rundspalt 25 erzeugt, durch den das Heizmedium (bzw. Kühlmedium) hindurchströmen kann. Bei der in Fig. 2 dargestellten Ausführungsform, die sich als besonders vorteilhaft erwiesen hat, ist eine spiralförmig um die Längsachse des Druckautoklaven gewundene, die Innenwand 24' mit der Außenwand 24'' verbindende Trennwand 26 angeordnet, so daß hierdurch eine spiralförmig gewundene Leitungsbahn für das Heiz- bzw. Kühlmedium innerhalb der Wand 24 des Druckautoklaven 1 entsteht.

Bei der Ausführungsform nach Fig. 3 sind innerhalb des Beschickungsraumes 3 Rohrleitungen 28, 29 und 30 in Wandnähe so angeordnet, daß der Bereich, innerhalb dessen das Beschickungsgut 31 eingebracht bzw. aufgebaut wird, von diesen Rohren nicht beeinträchtigt wird. Dabei sind jeweils, wie aus Fig. 3 ersichtlich verschiedene Bündel von Rohrleitungen 28, 29 und 30 vorgesehen, wobei die Rohrleitungen innerhalb jedes Bündels gleichen, die der verschiedenen Bündel jedoch zueinander unterschiedlich großen Durchströmquerschnitt aufweisen. Hierdurch kann erreicht werden, daß der Wärmeübergang beim Hindurchlaufen von Heiz- bzw. Kühlmedium je nach gewähltem Rohrbündel unterschiedlich stark ist und dabei eine unterschiedliche Aufheizung bzw. Abkühlung innerhalb des Beschickungsraumes erfolgen kann. Dabei sind entsprechende (in den Figuren nicht gezeigte) Einrichtungen vorgesehen, die es ermöglichen, die einzelnen Rohrbündel getrennt voneinander oder zusammen miteinander an den Heiz- bzw. Kühlkreislauf anzuschließen, wodurch eine leichte und einfache Steuerungsmöglichkeit für die Erwärmung bzw. Abkühlung des Reaktionsraumes 3 gegeben ist.

Die erfindungsgemäße Vorrichtung funktioniert nun folgendermaßen:

Über dem Bajonettverschluß 2 wird der Druckautoklav 1 geöffnet, das zu behandelnde Gut 31 in den Reaktionsraum 3 eingebracht und sodann dieser mittels des Bajonettverschlusses 2 wieder hermetisch verschlossen. Anschließend wird (über nicht gezeigte Einrichtungen) der Beschickungsraum 3 mittels Inertgas gespült und der vorhandene Sauerstoff ausgeblasen. Sodann wird über die Rauchgasleitung 22, die Steuereinrichtung 5 und die Zuleitung 4 heißes Rauchgas in die Heizkanäle des Druckautoklaven 1 eingeführt und hierdurch eine (indirekte) Beheizung des zu behandelnden Gutes 31 durchgeführt. Die eingesetzten Rauchgase werden entsprechend den Erfordernissen in ihrer Temperatur bereits in der Mischkammer 17 des Wärmeerzeugerkessels 10 entsprechend eingestellt, wobei hier Temperaturen bis zu ca. 850°C Anwendung finden können. Das zu behandelnde Gut 31 heizt sich nun innerhalb des Reaktionsraumes 3 des Druckautoklaven 1 bis zu Temperaturen von etwa 450°C auf. Die dabei entstehenden Pyrolysegase können jedoch noch nicht in die Pyrolysegasleitung 9 eintreten, da das Druckventil 7 bis zu dem Druckwert, der über die Einstellung 8 ihm vorgegeben ist, den Einlaß in die Pyrolysegasleitung 9 verschließt. Sobald allerdings im Reaktionsraum 3 ein entsprechendes Druckniveau erreicht ist, öffnet das Druckventil 7 und die Pyrolysegase können unter dem dann vorhandenen Druck durch die Gasleitung 9 dem Brenner 11 für die Eindüsung der Pyrolysegase in den Wärmeerzeuger 10 zugeführt werden. Durch den aufgebauten Überdruck ist es dabei möglich, eine kontinuierliche und stabile Zuleitung der Pyrolysegase in den Brenner 11 sicherzustellen. Der im Reaktionsraum 3 ablaufende pyrolytische Vorgang, der von der eingestellten Temperatur wie vom vorhandenen Druckniveau abhängig ist, kann über eine geeignete Steuerung des Druckventils 7 einerseits (im Hinblock auf die Entnahme von Pyrolysegasen), wie auch über die Steuereinrichtung 5 zur Steuerung der Menge der über die Leitung 22 ankommenden Rauchgase andererseits und auch zusätzlich ggf. über die entsprechende Ansteuerung der Mischeinrichtung innerhalb der Mischkammer 17 und der Drosselklappe 21 gezielt beeinflußt und gesteuert werden. Hierbei ergibt sich auch noch die Möglichkeit, weitere Steuerungsmaßnahmen etwa durch geeignete Einrichtungen zum Steuern der Durchlaufgeschwindigkeit der Heizgase durch die Heizkanäle, durch Zu- bzw. Abschalten geeigneter Heizquerschnitte (vgl. Beispiel nach Fig. 3) sowie auch durch eine entsprechend angeordnete Heizgasführung durchzuführen bzw. vorzunehmen. Durch die Verwendung eines Druckbehälters als Reaktionsraum können auch schwallartig entstehende, das Druckniveau im Reaktionsraum erhöhende Gasmengen dort aufgenommen werden, ohne daß es zu einer Gefahrensituation kommt.

Sinkt das Druckniveau innerhalb des Beschickungsraumes 3 des Druckautoklaven 1 unter den eingestellten Druckwert des Druckventils 7 ab, dann schließt dieses wieder den Eingang zur Pyrolysegasleitung 9.

Im Brenner des Wärmeerzeugerkessels 10 wird über die Düse 12 ein Primärbrennstoff, wie z.B. Ferngas oder auch Öl, zu dem vom Gebläse 13 erzeugten Luftdurchsatz eingebracht und dort eine entsprechende, von der Zuleitung der Pyrolysegase unabhängige Flamme erzeugt. Sobald allerdings über die Pyrolysegasleitung 9 und den Brenner 11 zusätzlich Pyrolysegas in die Brennkammer 36 eingeleitet wird, wird durch eine geeignete Regeleinrichtung—in Abhängigkeit von dem Restsauerstoffgehalt im Rauchgas—sogleich die Zufuhr an Primärbrennstoff über die Leitung 14 zum Brenner 12 so zurückgenommen, daß bei dem vorgegebenen, konstanten Luftdurchsatz weiterhin eine stabile Flamme aufrechterhalten und gleichzeitig der gewünschte Restsauerstoffgehalt im Rauchgas eingehalten wird. Schließt hingegen das Druckventil 7 wegen Druckabfalls im Inneren des Reaktionsraumes 3 und entfällt entsprechend die Gaseinleitung über den Brenner 11, dann wird eine entsprechende Veränderung des Restsauerstoffgehaltes im Rauchgas sogleich zu einer Verstärkung der Primärbrennstoff-Zufuhr über den Brenner 12 führen. Hierdurch ist der Vorteil gegeben, daß stets nur so viel an Primärbrennstoff eingedüst wird, wie zur Aufrechterhaltung der geforderten Brennerleistung neben dem eingeleiteten Pyrolysegas noch erforderlich ist. Dadurch wird in besonders wirtschaftlicher Weise unnötiger Energieverbrauch verhindert und eine stetige Wärmeabgabe an das den Brennraum 36 umgebende Wärmetransportmedium (Heißdampf, Warmwasser o.ä.) sichergestellt. Dabei wird über die Abgabeleitung 34 das erhitzte Wärmetransportmedium dann zu einem geeigneten Wärmeverbraucher abgeführt.

Steigt trotz offener Pyrolysegasleitung 9 dennoch der Druck im Reaktionsraum 3 über einen vorgegebenen Grenzwert weiterhin an, dann kann durch geeignete Regeleinrichtungen z.B. über die Steuereinrichtung 5 eine Drosselung der Zufuhr an Heißgas vorgenommen werden. Dem vorgeschaltet (oder auch gleichzeitig hierzu) kann auch innerhalb der Mischkammer 17 des Wärmeerzeugerkessels 10 zunächst die Temperatur der Rauchgase entsprechend nach unten verändert werden, um bereits temperaturseitig die gewünschte Einflußwirkung zu erzielen. Sind auch diese Maßnahmen noch nicht ausreichend, um einen weiteren Druckanstieg im Reaktionsraum 3 zu verhindern, dann kann über die Steuereinrichtung 5 ggf. die Rauchgaszufuhr aus dem Wärmekessel 10 vollständig verhindert und, falls noch immer ein Druckanstieg stattfindet, die Zuschaltung von Kühlmedium aus der Leitung 23 in die Heizkanäle des Druckautoklaven 1 vorgenommen werden. Sollte auch der Extremfall eintreten, daß selbst hierdurch ein weiterer Druckanstieg nicht in ausreichendem Maße verhindert werden kann, dann ist am Druckautoklaven 1 noch ein einstellbares Sicherheitsventil 32 vorgesehen, das bei Erreichen eines gewissen Grenzdruckes den Druck aus dem Reaktionsraum 3 ganz oder teilweise abläßt.

Die Verwendung des Bajonettverschlusses 2 zum Öffnen bzw. Verschließen des Druckautoklaven 1 ermöglicht eine chargenweise, somit intermittierende Beladung desselben. Es gibt jedoch durchaus auch die Möglichkeit, durch Vorsehen von Schleusen o.ä. eine andere Beschickungsart vorzusehen, die mehr in Richtung auf eine kontinuierliche Beschickung wirksam ist. Hierbei handelt es sich jedoch um Maßnahmen, die dem einschlägigen Fachmann geläufig sind, und deren Anwendung auf die vorliegende Erfindung von ihm im Rahmen der geforderten Einsatzbedingungen jederzeit durchführbar ist. Auch kann das einstellbare Druckventil 7 in der Pyrolysegasleitung sowohl als reine EIN/AUS-Ventil, wie auch als ein kontinuierlich öffnendes bzw. schließendes Ventil gewählt werden, was je nach Einsatzfall entschieden werden muß.

**Ansprüche**

1. Verfahren zur thermischen Behandlung von in einen beheizbaren Beschickungsraum (3) eines Autoklaven (1) eingebrachten Rückständen, Bauteilen oder dergleichen, die dort unter Wärmezufuhr und unter Druckaufbau einer erhöhten Temperatur ausgesetzt werden, wobei die entstehenden Pyrolysegase unter Druck aus dem Autoklaven (1) zu einer nachgeschalteten Weiterbehandlung abgeführt werden, dadurch gekennzeichnet, daß die Rückstände, Bauteile oder dergleichen im Autoklaven (1) in Abwesenheit von Sauerstoff auf eine Temperatur bis etwa 450°C aufgeheizt und die dabei erzeugten Pyrolysegase nach Erreichen eines vorgewählten Druckniveaus bis zu 5 bar abgezogen werden.

2. Verfahren nach Anspruch 1, dadurch gekennzeichnet, daß die Beheizung des Beschickungsraumes (3) in Abhängigkeit vom Druckniveau im Autoklaven (1) gesteuert wird.

3. Verfahren nach Anspruch 1 oder 2, dadurch gekennzeichnet, daß nach Einbringen des zu behandelnden Materiales in den Beschickungsraum (3) und vor Aufheizen desselben und/oder nach Ende des pyrolytischen Prozesses eine Spülung des Beschickungsraumes (3) mittels Inertgas durchgeführt wird.

4. Verfahren nach einem der Ansprüche 1 bis 3, dadurch gekennzeichnet, daß die aus dem Autoklaven (1) abgeleiteten Pyrolysegase dem Brennraum (36) eines Wärmeerzeugers (10) zugeführt werden.

5. Verfahren nach einem der Ansprüche 1 bis 4, dadurch gekennzeichnet, daß zur Aufheizung des Autoklaven (1) aus der Rauchgasführung des nachgeschalteten Wärmeerzeugers (10) abgeleitete Rauchgase bis zu einer Temperatur von ca. 850°C verwendet werden.

6. Verfahren nach Anspruch 5, dadurch gekennzeichnet, daß die Aufheizung des Autoklaven (1) über eine Durchleitung der heißen Rauchgase aus dem Wärmeerzeuger (10) durch einen um die Außenfläche der Wände (24') des Autoklaven-Beschickungsraumes (3) ausgebildeten Spalt (25) vorgenommen wird.

7. Verfahren nach Anspruch 6, dadurch gekennzeichnet, daß die Aufheizung des Autoklaven (1) mittels Durchleiten heißer Rauchgase aus dem Wärmeerzeuger (10) durch innerhalb des Beschickungsraumes (3) angeordnete Heizkanäle (28, 29, 30) vorgenommen wird.

8. Verfahren nach einem der Ansprüche 1 bis 7, dadurch gekennziechnet, daß dem Beschickungsraum (3) des Autoklaven (1) das zu behandelnde Material (31) chargenweise zugeführt wird.

9. Verfahren nach einem der Ansprüche 1 bis 7, dadurch gekennzeichnet, daß die Zuführung des zu behandelnden Materiales (31) in den Beschickungsraum (3) kontinuierlich erfolgt.

10. Verfahren nach Anspruch 4, dadurch gekennzeichnet, daß für eine konstante Verbrennungsleistung im Brennraum (36) des Wärmeerzeugers (10) die neben der Pyrolysegaszufuhr erforderliche Zufuhr eines Primärbrennstoffes bei konstantem Luftdurchsatz in Abhängigkeit von der Einregelung eines vorgegebenen Sauerstoff-gehaltes im Rauchgas gesteuert wird.

11. Vorrichtung zur Durchführung des Verfahrens nach einem der Ansprüche 1 bis 10, mit einem als beheizbarer Beschickungsraums (3) ausgebildeten Autoklaven (1) als Reaktionsraum, der eine Leitung (9) mit einem Druckventil (7) zum Abführen von in seinem Inneren erzeugten Pyrolysegasen zur Weiterverarbeitung aufweist, dadurch gekennzeichnet, daß der Beschickungsraum (3) als gegen Sauerstoffzutritt verschließbarer druckfester Autoklav (1) ausgelegt und das Druckventil (7, 8) so ausgebildet ist, daß es nach Erreichen eines voreinstellbaren Öffnungsdruckes, der im Bereich bis 5 bar liegt, die Leitung (9) freigibt und bei Uniterschreiten dieses Öffnungsdruckes die Leitung (9) absperrt.

12. Vorrichtung nach Anspruch 11, dadurch gekennzeichnet, daß der Autoklav als im Querschnitt rund ausgebildeter Druckbehälter (1) ausgeführt ist.

13. Vorrichtung nach Anspruch 11 oder 12, dadurch gekennzeichnet, daß der Autoklav (1) doppelwandig ausgeführt und der Spalt (25) zwischen der Wand (24') des Beschickungsraumes (3) und der Außenwand (24") als Durchströmkanal für das Heizmedium ausgebildet ist.

14. Vorrichtung nach Anspruch 13, dadurch gekennzeichnet, daß innerhalb der Doppelwandung (24', 24") des Autoklaven (1) spiralförmig angeordnete Leitbleche (26) zur Leitung des Heizmediums spiralförmig in Autoklaven-Längsrichtung vorgesehen sind.

15. Vorrichtung nach Anspruch 11 oder 12, dadurch gekennzeichnet, daß zur Rauchgasführung des Heizkreislaufes innerhalb des Beschickungsraumes (3) angeordnete Heizrohre (28, 29, 30) vorgesehen sind.

16. Vorrichtung nach Anspruch 15, dadurch gekennzeichnet, daß die Heizrohre (28, 29, 30) in der Nähe der Wände (24) des Beschickungsraumes (3), jedoch außerhalb des Bereiches zur Aufnahme von Beschikkungsmaterial (31) angeordnet sind.

17. Vorrichtung nach Anspruch 15 oder 16, dadurch gekennzeichnet, daß Heizrohre (28, 29, 30) unterschiedlicher Durchmesser Vorgesehen sind, wobei Heizrohre gleichen Durchmessers jeweils unabhängig von denen anderer Durchmesser an den Heizkrieslauf (4, 5, 22) anbeziehungsweise von ihm abschaltbar sind.

18. Vorrichtung nach einem der Ansprüche 11 bis 17, dadurch gekennzeichnet, daß der Heizkreislauf des Autoklaven (1) wahlweise an den Kreislauf (4, 5, 23) eines Kühlmediums anschließbar ist.

19. Vorrichtung nach einem der Ansprüche 11 bis 18, dadurch gekennzeichnet, daß die vom Druckventil (7, 8) gesteuerte Pyrolysegasleitung (9) mit einem Brenner (11) eines Wärmeerzeugers (10) verbunden ist.

20. Vorrichtung nach einem der Ansprüche 11 bis 19, gekennzeichnet durch eine Steuerungseinrichtung (5) für die Zuleitung des Heiz- (22) beziehungsweise Kühlmediums (23) an den Autoklaven (1).

**Claims**

1. Process for the heat treatment of residues, components or the like introduced into a heatable charging chamber (3) of an autoclave (1) and which are exposed there to an elevated temperature, accompanied by the supply of heat and a pressure build-up, the resulting pyrolysis gases being removed under pressure from autoclave (1) to a following further treatment, characterized in that the residues, components or the like are heated in autoclave (1) to a temperature of up to approximately 450°C in the absence of oxygen and the pyrolysis gases produced are removed after reaching a preselected pressure level of up to 5 bar.

2. Process according to Claim 1, characterized in that the heating of the charging chamber (3) is controlled as a function of the pressure level in autoclave (1).

3. Process according to Claims 1 or 2, characterized in that after feeding the material to be treated into charging chamber (3) and prior to heating the latter and/or after the end of the pyrolytic process the charging chamber (3) is scavenged with inert gas.

4. Process according to one of the Claims 1 to 3, characterized in that the pyrolysis gases removed from autoclave (1) are supplied to the combustion chamber (36) of a heat producer (10).

5. Process according to one of the Claims 1 to 4, characterized in that the flue gases at a temperature of up to approximately 850°C removed from the flue of the following heat producer (10) are used for heating autoclave (1).

6. Process according to Claim 5, characterized in that the autoclave (1) is heated by passing the hot flue gases from heat producer (10) through a gap (25) formed around the outer surface of walls (24') of the autoclave charging chamber (3).

7. Process according to Claim 6, characterized in that the autoclave (1) is heated by passing hot flue gases from the heat producer (10) through heating ducts (28, 29, 30) arranged within charging chamber (3).

8. Process according to one of the Claims 1 to 7, characterized in that the material (31) to be treated is supplied batchwise to charging chamber (3) of autoclave (1).

9. Process according to one of the Claims 1 to 7, characterized in that the material (31) to be treated is supplied to charging chamber (3) continuously.

10. Process according to Claim 4, characterized in that for a constant combustion efficiency in combustion chamber (36) of heat producer (10) the supply of a primary fuel which is required in addition to the pyrolysis gas supply is controlled with a constant air flow rate as a function of the setting of a predetermined oxygen content in the flue gas.

11. Apparatus for performing the process according to one of the Claims 1 to 10 with an autoclave (1) constructed as a heatable charging chamber (3) as the reaction chamber having a line (9) with a discharge valve (7) for removing pyrolysis gases produced in the interior thereof for further processing, characterized in that the charging chamber (3) is designed as a pressure-resistant autoclave (1) which can be sealed against oxygen access and the discharge valve (7, 8) is constructed in such a way that after reaching a presettable opening pressure, in the range of up to 5 bar, it opens line (9) and dropping below this opening pressure closes line (9).

12. Apparatus according to Claim 11, characterized in that the autoclave is constructed as a cross-sectionally round pressure tank (1).

13. Apparatus according to Claims 11 or 12, characterized in that autoclave (1) is constructed in a double-wall manner and gap (25) between wall (24') of charging chamber (3) and outer wall (24'') is constructed as a flow duct for the heating medium.

14. Apparatus according to Claim 13, characterized in that spirally arranged deflector plates (26) for guiding the heating medium in a spiral manner in the longitudinal direction of the autoclave are provided within the double wall (24', 24'') of autoclave (1).

15. Apparatus according to Claims 11 or 12, characterized in that heating pipes (28, 29, 30) arranged within charging chamber (3) are provided for the flue gas guidance of the heating circuit.

16. Apparatus according to Claim 15, characterized in that the heating pipes (28, 29, 30) are located in the vicinity of walls (24) of charging chamber (3), but outside the area for receiving the charging material (31).

17. Apparatus according to Claims 15 or 16, characterized in that heating pipes (28, 29, 30) of different diameters are used and heating pipes of the same diameter can be connected to or disconnected from the heating circuit (4, 5, 55) independently of those of other diameters.

18. Apparatus according to one of the Claims 11 to 17, characterized in that the heating circuit of autoclave (1) can be connected, as required, to a coolant circuit (4, 5, 23).

19. Apparatus according to one of the claims 11 to 18, characterized in that the pyrolysis gas line (9) controlled by discharge valve (7, 8) is connected with a burner (11) of a heat producer (10).

20. Apparatus according to one of the Claims 11 to 19, characterized by a control device (5) for supplying the heating medium (22) or cooling medium (23) to autoclave (1).

**Revendications**

1. Procédé pour le traitement thermique de déchets, pièces d'assemblage ou analogue introduits dans une chambre d'alimentation chauffable (3) d'un autoclave (1), où ils sont soumis à une température croissante par apport de chaleur et montée de pression, les gas de pyrolyse en résultant étant évacués sous pression de l'autoclave (1) pour aller à un poste de traitement ultérieur monté à la suite, caractérisé en ce que les déchets, pièces d'assemblage ou analogue sont chauffés dans l'autoclave (1) en l'absence d'oxygène à une température d'environ 450°C, et que les gaz de pyrolyse qui en résultent sont extraits lorsqu'une pression prédéterminée, pouvant atteindre 5 bars, est atteinte.

2. Procédé selon la revendication 1, caractérisé en ce que le chauffage de la chambre d'alimentation (3) est commandé en fonction de la pression dans l'autoclave (1).

3. Procédé selon la revendication 1 ou 2, caractérisé en ce qu'on effectue un lavage de la chambre d'alimentation (3) avec un gaz inerte avant l'introduction du matériau à traiter dans ladite chambre (3) et avant le chauffage de celle-ci et/ou après terminaison du processus de pyrolyse.

4. Procédé selon l'une des revendications 1 à 3, caractérisé en ce que les gaz de pyrolyse sortant de l'autoclave (1) sont amenés à la chambre de combustion (36) d'un appareil producteur de chaleur (10).

5. Procédé selon l'une des revendications 1 à 4, caractérisé en ce qu'on utilise pour chauffer l'autoclave (1) des gaz de fumée atteignant une température d'environ 850°C et provenant de l'évacuation des gaz de fumée de l'appareil producteur de chaleur (10) monté à la suite.

6. Procédé selon la revendication 5, caractérisé en ce que le chauffage de l'autoclave (1) s'effectue par le guidage des gaz de fumée chauds provenant de l'appareil producteur de chaleur (10) à travers un intervalle (25) formé autour de la surface extérieure des parois (24') de la chambre d'alimentation (3) de l'autoclave.

7. Procédé selon la revendication 6, caractérisé en ce que le chauffage de l'autoclave (1) s'effectue en faisant passer les gas de fumée chauds provenant de l'appareil producteur de chaleur (10) par des conduits de chauffage (28, 29, 30) disposés à l'intérieur de la chambre d'alimentation (3).

8. Procédé selon l'une des revendications 1 à 7, caractérisé en ce que le matériau (31) à traiter est amené par charges à la chambre d'alimentation (3) de l'autoclave (1).

9. Procédé selon l'une des revendications 1 à 7, caractérisé en ce que l'alimentation du matériau (31) à traiter dans la chambre d'alimentation (3) s'effectue en continu.

10. Procédé selon la revendication 4, caractérisé en ce que pour une puissance de combustion constante dans la chambre de combustion (36) de l'appareil producteur de chaleur (10), l'alimentation nécessaire en combustible primaire à côté de l'alimentation en gaz de pyrolyse, est commandée, pour un débit d'air constant, en fonction du réglage d'une teneur prédéterminée en oxygène des gaz de fumée.

11. Dispositif pour mettre en oeuvre le procédé selon l'une des revendications 1 à 10, comportant comme chambre de réaction un autoclave (1) réalisé en tant que chambre d'alimentation (3) chauffable, qui comporte une canalisation (9) avec un clapet de pression (7) pour évacuer, aux fins d'un traitement ultérieur, des gaz de pyrolyse produits à l'intérieur de cette chambre, caractérisé en ce que la chambre d'alimentation (3) est conçue sous forme d'autoclave (1) résistant à la pression et pouvant être fermé pour empêcher l'entrée d'oxygène et que le clapet de pression (7, 8) est réalisé de telle sorte que, lorsqu'est atteinte une pression d'ouverture préréglable située dans la plage allant jusqu'à 5 bars, il libère la canalisation (9) et qu'il la ferme lorsque la pression descend en dessous de cette pression d'ouverture.

12. Dispositif selon la revendication 11, caractérisé en ce que l'autoclave est réalisé sous forme de récipient sous pression (1) de section transversale ronde.

13. Dispositif selon les revendications 11 ou 12, caractérise en ce que l'autoclave (1) est à double paroi et que l'intervalle (25) entre la paroi (24') de la chambre d'alimentation (3) et al paroi extérieure (24'') est réalisé en tant que conduit de passage pour le fluide de chauffage.

14. Dispositif selon la revendication 13, caractérisé en ce qu'on prévoit à l'intérieur de la paroi double (24', 24'') de l'autoclave (1) des déflecteurs (26) disposés en spirale pour guider en spirale le fluide de chauffage dans le sens longitudinal de l'autoclave.

15. Dispositif selon les revendications 11 ou 12, caractérisé en ce qu'on prévoit pour guider le gaz de fumée du circuit de chauffage des tuyaux de chauffage (28, 29, 30) disposés à l'intérieur de la chambre d'alimentation (3).

16. Dispositif selon la revendication 15, caractérisé en ce que les tuyaux de chauffage (28, 29, 30) sont disposés au voisinage des parois (24) de la chambre d'alimentation (3), toutefois, à l'extérieur de la zone servant à recevoir le matériau d'alimentatation (31).

17. Dispositif selon les revendications 15 ou 16, caractérisé en ce qu'on prévoit des tuyaux de chauffage (28, 29, 30) de diamètres différents, les tuyaux de même diamètre pouvant être raccordés au circuit de chauffage (4, 5, 22) ou être mis hors circuit indépendamment des tuyaux ayant un autre diamètre.

18. Dispositif selon l'une des revendications 11 à 17, caractérisé en ce que le circuit de chauffage de l'autoclave (1) peut être à volonté raccordé au circuit (4, 5, 23) d'un fluide de refroidissement.

19. Dispositif selon l'une des revendications 11 à 18, caractérisé en ce que la canalisation de gaz de pyrolyse (9) commandée par le clapet de pression (7, 8) est reliée au brûleur (11) d'un appareil producteur de chaleur (10).

20. Dispositif selon l'une des revendications 11 à 19, caractérisé par un dispositif de commande (5) pour la canalisation d'amenée du fluide de chauffage (22) ou de refroidissement (23) à l'autoclave (1).

Fig.1

0 007 620

# Fig.2

# Fig.3